# EUROPEAN PATENT SPECIFICATION

(11) **EP 1 324 172 B1**
(45) Date of publication and mention of the grant of the patent: **08.02.2012**
(21) Application number: 02258777.8
(22) Date of filing: 19.12.2002
(51) Int. Cl.: G06F 1/00, G06F 3/06

(54) **System and method for securing fiber channel drive access in a partitioned data libray**
System und Methode für das Sichern eines Faser-Kanal Laufwerkzugangs in einer partitionierten Datenlibrary
Le système et la méthode pour fixer le canal de fibre conduisant l'accès dans des données divisées

(30) Priority: 28.12.2001 US 33010
(43) Date of publication of application: 02.07.2003
(73) Proprietor: Hewlett-Packard Development Company, L.P., Houston, TX 77070 (US)
(72) Inventor: Camble, Peter Thomas, Bishopston, Bristol BS7 9HT (GB); Gold, Stephen, Winterbourne Down, Bristik BS36 1DJ (GB); Crighton, Ian Peter, Winterbourne, Bristol BS 36 1JS (GB)
(74) Representative: Baldwin, Mark

(56) References cited:
- EP-A- 0 859 308
- EP-A1- 1 156 408
- US-B1- 6 328 766

## Description

The invention generally relates to data storage and specifically to a system and method for partitioning a storage area network associated data library. More particularly, it relates to a system and method for securing fiber channel drive access in a partitioned data library.

In certain storage area networks (SAN) usage scenarios, such as may arise for storage service providers (SSPs), there are multiple customers attempting to share the same common SAN resources. In such cases, there is a need to ensure that customers can only see and access the storage resources they have been allocated and prevent them from accessing storage of other customers. For example, if a customer stores their critical business data with a SSP, then they generally do not want other customers of the SSP reading their data or even being aware that they have information stored with the SSP. The capability to partition a tape library is known. However, special hardware or special backup software as described below has been used to implement partitioning.

Existing software-based data library partitioning solutions typically employ a host system that restricts access to portions of a tape library. The host restrictions are implemented by a mediating software process on a host system to enforce partition restrictions. However, this approach is problematic. Specifically, the approach is undesirable if the data library is utilized in a SSP environment. In SSP environments, the data library and the host systems may belong to different entities (e.g., the SSP and the customers). Placement of software mediating processes on host systems is unattractive, because it increases the burden on the customers to make use of the storage service. Moreover, many customers are unwilling to allow other parties to place software on their host systems. Additionally, the software mediating process approach is typically incompatible with existing data back-up utilities, i.e., the software mediating process approach requires the use of specialized data back-up applications. Hence, users are effectively denied the ability to run desired backup software.

Existing fibre channel (FC) disk array firmware may be used to provide security in an FC redundant array of independent disks (RAID), since the disk array firmware has direct control over the array's ports connected to the SAN. Every host and device connection into the SAN generally has a unique FC-based world-wide-name (WWN), which can be used by an FC-based RAID to uniquely identify a device or host connection. Therefore, the FC-disk array firmware may be configured so that when a host attempts to send a small computer systems interface (SCSI) command to a FC-logical unit number (LUN) inside the RAID, the firmware will check the originating WWN from the server that sent the command against a list of authorized WWNs. If the WWN is on the list of authorized WWNs for that RAID FC-LUN, the SCSI command may be processed, if the WWN is not on the list of authorized WWNs for the RAID FC-LUN the command will be rejected. The list of authorized WWN's for each RAID FC-LUN may be configured via the existing management software for the RAID.

However, if a standard existing SCSI device, such as a data tape library is connected to a FC SAN via existing FC interfaces, such as existing FC tape drives in the library, it is not possible to secure these devices so that only certain hosts can access them, as individual existing FC tape drives do not support the FC WWN-based security discussed above. As a typical example, if a FC tape drive is connected to a SAN, it is visible to every server connected to that SAN. This circumstance is unacceptable for a SAN that offers secure storage resources to diverse customers. Existing solutions do not allow fibre channel tape drive devices to be secured in a SAN environment. The scheme to secure LUNs implemented in FC disk arrays, as discussed above, does not extend to securing physical tape drives that make up a logical partition within a SAN attached tape library.

FC switches have the capability of configuring security zones that define which WWNs or FC ports of a server can see which WWNs or FC ports of devices.
However, this FC switch zoning does not extend to device LUNs, so it is only possible to provide security using such FC switch zoning at the FC port level. Even if tape libraries are directly attached on a FC SAN, it would be very difficult for a user to define security zones for the library tape drives. A data tape library can have multiple FC tape drives, and may be logically partitioned into partitions extending across multiple fibre channel tape drives. Therefore, it would be difficult for a user to correctly identify which FC ports and LUNs should be associated together in the same security zone for an FC switch. Understandably, a user may easily make mistakes in such a manual configuration process.

Access to stand-alone native FC devices may be secured by using switch zoning, facilitated by a one -to-one relationship between a stand alone FC drive and an accessing user's WWN. In a data library, the library controller is typically placed behind a bridge. Configuring an FC switch for switch zoning to secure such a controller adds a process for a SAN administrator to implement and coordinate with users. FC switch configuration is not typically under control of a library's management card.

EP1 156 408 discloses a library system comprising a data library connected with a server that may be connected with one or more client machines. The data library comprises a library unit comprising a storage section divided into storage stations holding respective different types of storage media such as CD-ROM, DVD RAM and DVD ROM and a reproduction section comprising reproduction sections containing respective sets of drives corresponding to the storage media of the storage sections. The library unit also comprises a controller to control the reproduction and storage sections. Each storage station and corresponding reproduction station constitutes a virtual unit. The controller is divided into three controls whose logical unit number (LUN) are associated with a respective virtual unit. The server has a storage memory that holds respective applications corresponding to the virtual units. The three virtual units are displayed on a screen of the server. The server is able to energise any one of the virtual units to reproduce a desired storage medium. Thus if a CD-ROM is to be produced, the server runs the associated application to cause the respective control of the controller to control the respective virtual unit. This allows a data library unit to house different types of storage medium and respective reproduction systems so that it is not necessary for the data library to have individual library units for different types of storage media.

The invention provides a data library as specified in claim 1.

The invention also includes a method for partitioning a data library as specified in claim 5.

A number of preferred embodiments of the invention will now be described with reference to the drawings, in which :-
FIGURE 1 is a diagrammatic illustration of a SAN operating in accordance with an embodiment of the invention; and
FIGURE 2 is a diagrammatic illustration of an example of a data library operating in accordance with an embodiment of the invention.

The invention is directed to system and method, which provide FC security for FC resources of a partitioned data library. A surrogate LUN for a virtual controller provided by one or more of the FC tape drives in an SCSI-based data library partitioning system and method may also be secured in accordance with the invention. A physical data library implementing the invention may be partitioned into multiple virtual library partitions, with each library partition having one or more physical drives, and a unique subset of library media slots, and a dedicated virtual controller LUN assigned to the partition as discussed below. Such a data library partitioning system and method is disclosed commonly-assigned in U.S. Patent application serial number 10/033,009 entitled "System and Method for Partitioning a Storage Area Network Associated Data Library Employing Element Addresses". Preferably the invention does not require modification to existing library hardware for implementation. The invention is preferably implemented employing firmware modifications to subject FC-based drives and library controller(s).

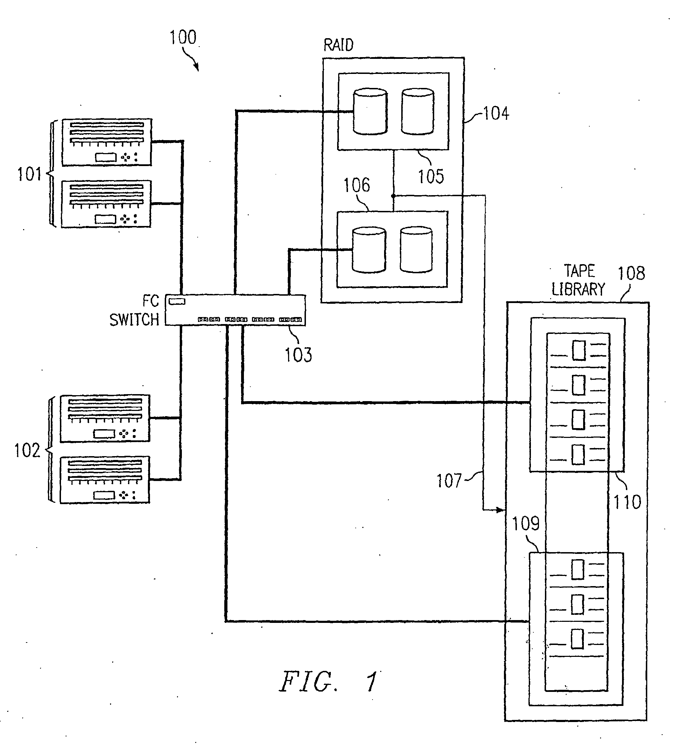

Turning to FIGURE 1, SAN 100 is shown. By way of example, first and second customer servers 101 and 102 are connected to SAN 100 via FC switch 103. RAID 104 may be partitioned using existing LUN-based RAID partitioning methods, for example, assigning first partition 105 to server 101 and second partition 106 to server 102. Zero downtime backups (ZDBs) may be performed of the data each server has on the RAID to tape library 108, via ZDB interconnectivity 107 between RAID 104 and tape library 108. Such ZDBs preferably employ data-mover firmware embodied in RAID 104 or other elements of SAN 100. Such ZDBs are preferably carried out without impinging on the processor operations or LAN capacity of servers 101 and 102. Tape library 108 is preferably partitioned employing the aforementioned system and method for library logical partitioning to insure that data for server 101 is maintained in partition 109 separate from data for server 102, and that the data of server 102 is maintained in partition 110 separate from data for server 101. Such partitioning facilitates implementation of the security system and method of the present invention to ensure that the servers may not access each other's data even though their data is maintained in the same physical library.

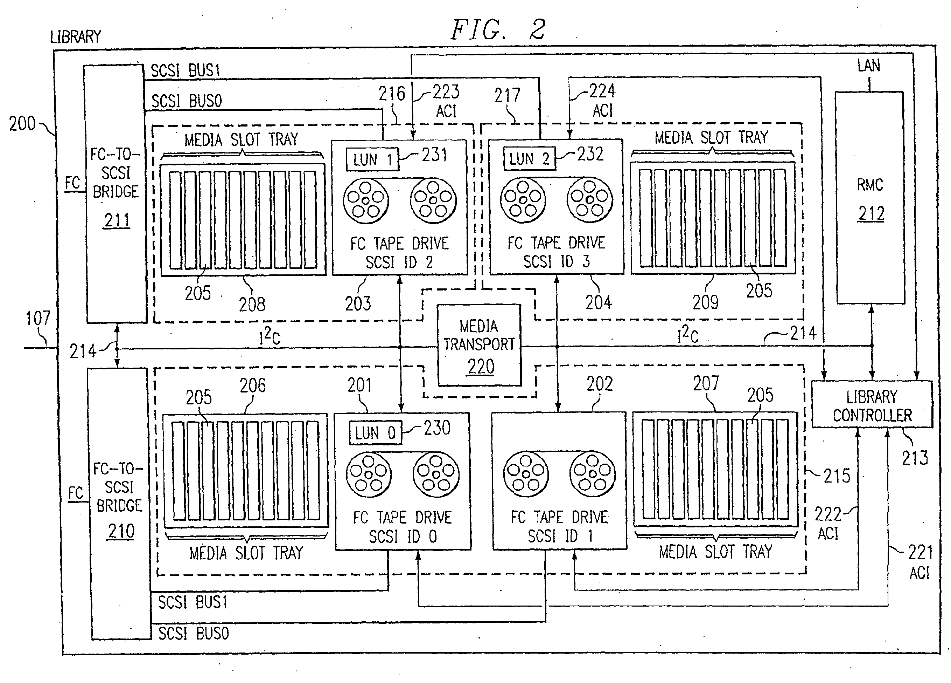

Data tape library 200 employing a preferred embodiment of the present system and method is illustrated in FIGURE 2 as an example of a library that may be employed as library 108 of FIGURE 1. However, other library designs and/or capacities may embody the present system and method. Exemplar data tape library 200 has four FC tape drives 201-204 serving as data transfer elements; forty media storage slots 205 organized into four trays 206-209 often slots 205 each; two FC-to-SCSI bridges 210 and 211; a library management interface card or remote management card (RMC) 212; library controller 213 and robotic media transport 220. The bridges, drives, transport, RMC and controller are preferably interconnected by inter-integrated circuit bus (I²C) 214. Additionally, drives 201-204 and library controller 213 preferably communicate with each other using dedicated automated control interface (ACI) links 221- 224 or the like, independently extending between each drive 201-204 and controller 213. Preferably, each drive is a FC device and has a FC address on a SAN with which the library is associated.

For partitions employed by a preferred embodiment of the present system and method, a subset of media slots 205 and tape drives 201-204 should be assigned to each partition, and a virtual controller should be addressable with respect to each partition for control of library robotic media transport 220. The example partitioning shown in FIGURE 2 is indicated by boxes 215, 216 and 217. As illustrated, SCSI LUN0 (230) corresponds to partition 215, SCSI LUN1 (231) corresponds to partition 216 and SCSI LUN2 (232) corresponds to partition 217. Mailslots or import/export elements may be assigned to each partition or configured for use by the entire library. Preferably, easily accessible media storage slots are configured as mailslots.

Preferably, a FC device in each partition, such as drives 201-204, may host one or more FC LUNs. SCSI commands to the drive itself are preferably directed to LUN 0. Each drive may present a virtual controller as surrogate LUN1. Preferably, only one drive in a partition presents a virtual controller for that partition. Controller 213 dictates which drive in a partition presents the virtual controller. Controller 213 configures the drive to provide the virtual controller via ACI 221, 222, 223 or 224.

SCSI commands to a virtual controller LUN received by a drive are passed to controller 213 over the drive's ACI. Controller 213 sends SCSI responses back to the drive over the drive's ACI 214. The drive, in turn, sends these SCSI responses over the FC SAN from the virtual controller LUN. The SCSI commands and responses are preferably sent over the ACI in a suitable form, packaged as an ACI message packet. The drive's firmware preferably supports functionality to facilitate hosting the virtual controller or surrogate LUN and pass back and forth SCSI messages to and from controller 213 over the drive's ACI. It is irrelevant to a drive which partition it is in, nor is it pertinent to a drive which virtual controller is being addressed by an SCSI command. Controller 213 determines and maintains which drive of a partition is hosting the virtual controller LUN. So, since the ACI is a point-to-point connection, as opposed to a bus (i.e. there is an ACI port on the controller for each drive, each of which connects to only one drive), when controller 213 receives SCSI commands over an ACI link, the commands are addressed to one particular virtual controller. Therefore, when controller 213 receives a SCSI command from a virtual controller of a drive, controller 213 can identify the partition based on the originating drive.

For each partition configured there will be one drive that hosts the virtual controller LUN for that partition. As indicated above, the drive hosting the virtual controller for the partition is determined by controller 213. Advantageously, if a drive in a partition fails, or is inadvertently disconnected from the FC SAN, the controller may configure one of the other drives in the partition to take over the virtual controller LUN hosting for that partition.

Access to existing stand-alone native FC devices may be restricted by using switch zoning, as discussed above. This is facilitated by the one-to-one relationship between an existing stand-alone FC drive and an accessing user's WWN. However, in a partitioned SCSI data library, library controller 213 is preferably placed behind a bridge, such as FC-to-SCSI bridge(s) 210 and/or 211. In such a situation, configuring an FC switch for switch zoning to secure controller 213 adds a process for a SAN administrator to implement and coordinate with users. FC switch configuration is not traditionally under control of a library management card and manual configuration of switch zoning is prone to error.

In accordance with the present inventive system and method native FC tape drives 201-204 may support security based on WWN or other unique host device identifiers without the need for switch zoning and the related manual configuration. To provide a more usable one-step configuration process such security may be established and modified via management card 212.

If all the tape drives 201 through 204 deployed in library 200 are FC tape drives and library controller 213 is not on a common bus with an FC-to-SCSI bridge, such as bridges 210 or 211, the library can be configured so that an instance of the library controller, one per partition, is accessed as surrogate LUNs 230, 231 and 232, via one tape drive in each partition. In the example illustrated in FIGURE 2, surrogate LUN0 (230) for partition 215 is provided by drive 201 while surrogate LUN1 (231) and surrogate LUN2 (232) are provided by drives 203 and 204, respectively, for partitions 216 and 217, respectively. The FC security of tape drives 201-204 and virtual controller LUN(s) 230-232 is preferably configured by a user via RMC 212. Additionally, RMC 212 defines which tape drives are in which partition.

To provide security in this fibre channel environment, a user may also configure which SAN hosts have access to partition resources such as tape drives, library controller and media in each partition, via a control interface of RMC 212. This security configuration may be carried out via a web browser interface or via a network management protocol interface. For example, the user may select an active partition and configure the partition to either be unsecured, allowing all hosts access, or restrict access to a list of host WWNs or similar unique host device identifiers. To provide maximum flexibility, by default a partition's security level is preferably set to unsecured. To prevent all hosts from accessing a partition, the partition may be configured with an empty list of WWNs. Conversely, access by all hosts to disabled resources not in an active partition is preferably restricted.

Preferably, the security configuration of a tape drive applies to access to the tape drive itself, which will include any extended third-party copy command, such as ZDBs, that the tape drive supports. The security configuration of a tape drive will also preferably apply to any virtual controller surrogate LUN 230, 231 and 232 the tape drive is hosting or supporting. Preferably, RMC 212 has no need to know which tape drive in a partition is hosting a surrogate LUN. Preferably, all tape drives in a partition have the same security settings. Therefore, as long as one of the tape drives in a partition hosts a surrogate LUN, for example as shown for partition 215 of FIGURE 2, the surrogate LUN 230 and drives 201 and 202 under the surrogate LUN will have the required security settings applied. Preferably, as discussed above, the firmware of the library controller determines which tape drive holds the virtual controller surrogate LUN for that partition. Alternatively, the firmware of the controller and the firmware of the tape drives may negotiate as to which tape drive holds the virtual controller surrogate LUN for each partition.

Preferably, a FC drive blocks the ability for a host connected to the associated SAN to see the drive. In other words, the drive does not respond to any SCSI commands (e.g. SCSI inquiry, etc.) based on the host's WWN. However, because the WWN is not sent in each SCSI command, a drive preferably filters based on source ID for the host assigned by a name server, as detailed below.

When a partition is reconfigured, the FC security settings of a tape drive are preferably reconfigured. RMC 212 sends a security configuration request to library controller 213 over I²C bus 214. According to a preferred embodiment, library controller 213 passes the security configuration request, in the format of a special ACI command, to the tape drive(s) via the ACI port of the tape drive(s). Since the FC-LUN security in the tape drives is configured out-of-band via the ACI, the SCSI bus used to carry data to and from the drive need not be used to configure security.

FC commands generally do not contain the WWN of the originating host. However, FC commands use a source ID. Therefore, in accordance with the present invention a tape drive should also maintain an FC source ID-to-WWN mapping. The tape drive should gather information regarding source ID-to-WWN mappings from a SAN-associated name server at login, and issue a request state change notification to the name server to be informed of any changes in these mappings. If new WWNs are added to a security look-up table maintained by an FC tape drive, the drive should query the name server for the source ID of this new WWN. Preferably, the source ID of each incoming command, whether issued to a tape drive or a surrogate LUN hosted by an FC tape drive, will be compared against the FC drive or surrogate LUN's security configuration and used to determine security access. If the source ID matches the source ID mapped to a WWN in the tabulated security settings then access is allowed. If the security setting for the drive or surrogate LUN is unsecured then access is allowed regardless of the source ID.

If security access to a partition is changed then the new security settings of that partition will preferably be sent to all tape drives in the partition. When a tape drive's firmware receives a security configuration request over the ACI it should erase its current security settings and then store in non-volatile random access memory (NVRAM) the new list of authorized WWNs, or an unsecured setting, contained in the security configuration request. A security configuration request to each affected FC tape drive may contain a list of authorized WWNs for that device. Where a library partition is unsecured and thus available to any initiator WWN, a security configuration request will leave a drive unsecured. The default configuration for a tape drive is preferably unsecured. Finally, if a security configuration request establishes an empty list of WWNs for a tape drive, the tape drive should not be part of an active partition and is thus disabled preferably disallowing only access at all to the drive by any user.

The library management firmware can use a security configuration request to clear any security information to an unsecured state. This may be required if the user wishes to set the library back to factory defaults or if the library management firmware detects a replacement FC tape drive that contains security information from another library which needs to be overwritten. If a tape drive is added or removed from a partition, the security settings of that tape drive are preferably altered to reflectthe security settings of the new partition.

As noted above, preferably, only firmware modifications to an existing library are required to employ the present invention. The modifications may need to be made to tape drive firmware to implement surrogate LUN functionality and to implement WWN-based filtering. The firmware of the library controller may need to be modified to give the controller the ability to configure the FC drives to use multiple virtual controller surrogate LUN functionality to configure the FC drives to use WWN based filtering on a per-partition basis. As pointed out above, preferably, no hardware modifications are required.

As one skilled in the art should recognize the present system and method is well-suited for use with other types of drive to SAN interfaces, for example internet small computer systems interface (iSCSI). Preferably, the only change for iSCSI devices to use the present system and method is that the iSCSI equivalent of the FC source ID and/or WWN, such as iSCSI name, is used to authenticate initiators for access to secured devices.

## Claims

1. A partitioned data library connected to a storage area network (100), said data library (200) comprising:
a plurality of partitions (215, 216, 217) that each comprise at least one storage element slot (205) adapted to store data storage media and at least one data transfer element (201, 202, 203, 204) that is adapted to receive said media and transfer data to and from said media; and
a library controller (213), **characterised in that**
a data transfer element of each partition hosts a logical element designation (LUNO, LUN1, LUN2) of a virtual controller (230, 231, 232) addressable with respect to the respective partition to control a media transport (220),
the respective data transfer elements of said partitions that host a logical element designation of a virtual controller are connected with said library controller by respective dedicated links (222, 223, 224) to pass commands received from host devices (101, 102) of said storage network to said library controller and receive responses from said library controller to be sent over the storage area network to the host devices, and
at least one data transfer element of a partition hosting a logical element designation of a virtual controller is configured to maintain a list of unique host identifiers and allow access to the respective partition only to host devices sending commands using a unique host identifier in said list.

2. The data library of claim 1, wherein a blank listing of unique host identifiers results in the partition being secured from access by any host device.

3. The data library of claim 1 or 2, wherein said data transfer elements are fiber channel connected data tape drives.

4. The data library of claim 1, 2 or 3, wherein said logical element designations are small computer systems interface logical unit numbers.

5. A method for partitioning a data library connected to a storage area network, the method comprising:
establishing a plurality of partitions (215, 216, 217) in said data library, each of said partitions comprising at least one storage element slot (205) and at least one data transfer element (201, 202, 203, 204), each of said slots adapted to store media and each of said data transfer elements adapted to receive said media and transfer data to and from said media; **characterised by**
on a data transfer element in each partition hosting a respective logical element designation (LUN0, LUN1, LUN2) of a virtual controller (230, 21, 232) addressable with respect to the partition to control a media transport (220);
providing respective dedicated links (222, 223, 224) between said data transfer elements hosting a virtual controller and a library controller (213) on which commands are passed from the data transfer element to the library controller and responses are received from the library controller to be sent over the storage area network to the host devices; and
maintaining a list of unique host identifiers on at least one data transfer element of a partition hosting a logical designation of a virtual controller and allowing access to the respective partition only to host devices sending commands using a host identifier in said list.

## Patentansprüche

1. Partitionierte Datenbibliothek, die mit einem Speicherbereichsnetzwerk (100) verbunden ist, wobei die genannte Datenbibliothek (200) Folgendes umfasst:
mehrere Partitionen (215, 216, 217), die jeweils wenigstens einen Speicherelement-Steckplatz (205) zum Speichern von Datenspeichermedien und wenigstens ein Datenübertragungselement (201, 202, 203, 204) zum Aufnehmen des genannten Mediums und zum Übertragen von Daten zu und von dem genannten Medium umfassen; und
eine Bibliothekssteuerung (213),
**dadurch gekennzeichnet, dass**
ein Datenübertragungselement jeder Partition eine logische Elementebezeichnung (LUN0, LUN1, LUN2) einer virtuellen Steuerung (230, 231, 232) trägt, die mit Bezug auf die jeweilige Partition adressierbar ist, um einen Medientransport (220) zu steuern,
die jeweiligen Datenübertragungselemente der genannten Partitionen, die eine logische Elementebezeichung einer virtuellen Steuerung tragen, mit der genannten Steuerung durch jeweilige dedizierte Verbindungen (222, 223, 224) verbunden sind, um von Host-Geräten (101, 102) des genannten Speichernetzwerks empfangene Befehle zu der genannten Steuerung zu leiten und über das Speicherbereichsnetzwerk zu den Host-Geräten zu sendende Antworten von der genannten Steuerung zu empfangen, und
wenigstens ein Datenübertragungselement einer Partition, die eine logische Elementebezeichung einer virtuellen Steuerung trägt, so konfiguriert ist, dass es eine Liste von eindeutigen Host-Kennungen führt und den Zugang zur jeweiligen Partition nur zu Host-Geräten zulässt, die Befehle mit einer eindeutigen Host-Kennung in der genannten Liste senden.

2. Datenbibliothek nach Anspruch 1, wobei eine leere Liste von eindeutigen Host-Kennungen zur Folge hat, dass die Partition vor Zugriffen durch ein Host-Gerät geschützt ist.

3. Datenbibliothek nach Anspruch 1 oder 2, wobei die genannten Datenübertragungselemente per Faserkanal verbundene Datenbandlaufwerke sind.

4. Datenbibliothek nach Anspruch 1, 2 oder 3, wobei die genannten logischen Elementebezeichnungen logische SCSI-(Small Computer Systems Interface)-Einheitsnummern sind.

5. Verfahren zum Partitionieren einer mit einem Speicherbereichsnetzwerk verbundenen Datenbibliothek, wobei das Verfahren Folgendes beinhaltet:
Erzeugen mehrerer Partitionen (215, 216, 217) in der genannten Datenbibliothek, wobei jede der genannten Partitionen wenigstens einen Speicherelement-Steckplatz (205) und wenigstens ein Datenübertragungselement (201, 202, 203, 204) umfasst, wobei jeder der genannten Steckplätze zum Speichern von Medien und jedes der genannten Datenübertragungselement zum Aufnehmen des genannten Mediums und zum Übertragen von Daten zu und von den genannten Medien ausgelegt ist;
**gekennzeichnet durch**
Tragen, auf einem Datenübertragungselement in jeder Partition, einer jeweiligen logischen Elementebezeichnung (LUN0, LUN1, LUN2) einer virtuellen Steuerung (230, 231, 232) trägt, die mit Bezug auf die jeweilige Partition zum Steuern eines Medientransports (220) adressierbar ist;
Bereitstellen jeweiliger dedizierter Verbindungen (222, 223, 224) zwischen den genannten, eine virtuelle Steuerung tragenden Datenübertragungselementen und der genannten Steuerung (213), auf denen Befehle von dem Datenübertragungselement zur Steuerung geleitet und über das Speicherbereichsnetzwerk zu den Host-Geräten zu sendende Antworten von der Steuerung empfangen werden; und
Führen einer Liste von eindeutigen Host-Kennungen auf wenigstens einem Datenübertragungselement einer Partition, die eine logische Bezeichnung einer virtuellen Steuerung trägt, und Zulassen des Zugangs zur jeweiligen Partition nur zu Host-Geräten, die Befehle mittels einer eindeutigen Host-Kennung in der genannten Liste senden.

## Revendications

1. Bibliothèque de données partitionnée connectée à un réseau de stockage (100), ladite bibliothèque de données (200) comportant :
une pluralité de partitions (215, 216, 217) qui comportent chacune au moins une fente pour élément de mémoire (205) adaptée à des fins de stockage de supports de stockage de données et au moins un élément de transfert de données (201, 202, 203, 204) qui est adapté à des fins de réception desdits supports et à des fins de transfert de données vers et en provenance desdits supports ; et
un contrôleur de bibliothèque (213), **caractérisée en ce que**
un élément de transfert de données de chaque partition héberge une désignation d'élément de logique (LUNO, LUN1, LUN2) d'un contrôleur virtuel (230, 231, 232) adressable par rapport à la partition respective à des fins de contrôle d'un transport de supports (220),
les éléments de transfert de données respectifs desdites partitions qui hébergent une désignation d'élément de logique d'un contrôleur virtuel sont connectés audit contrôleur par des liaisons spécialisées respectives (222, 223, 224) pour passer des commandes reçues en provenance de dispositifs hôtes (101, 102) dudit réseau de stockage jusqu'audit contrôleur et pour recevoir des réponses en provenance dudit contrôleur à des fins d'envoi par le réseau de stockage jusqu'aux dispositifs hôtes, et
au moins un élément de transfert de données d'une partition hébergeant une désignation d'élément de logique d'un contrôleur virtuel est configuré pour maintenir une liste d'identificateurs hôtes uniques et accorder l'accès à la partition respective uniquement aux dispositifs hôtes en envoyant des commandes en utilisant un identificateur hôte unique dans ladite liste.

2. Bibliothèque de données selon la revendication 1, dans laquelle une liste vierge d'identificateurs hôtes uniques donne lieu à la protection de la partition contre tout accès par un dispositif hôte quelconque.

3. Bibliothèque de données selon la revendication 1 ou la revendication 2, dans laquelle lesdits éléments de transfert de données sont des lecteurs de bandes de données à connexion sur un canal de fibres optiques.

4. Bibliothèque de données selon l'une quelconque des revendications 1, 2 ou 3, dans laquelle lesdites désignations d'éléments de logique sont des numéros d'unité logique du type à interface SCSI.

5. Procédé de partitionnement d'une bibliothèque de données connectée à un réseau de stockage, le procédé comportant :
établir une pluralité de partitions (215, 216, 217) dans ladite bibliothèque de données, chacune desdites partitions comportant chacune au moins une fente pour élément de mémoire (205) et au moins un élément de transfert de données (201, 202, 203, 204), chacune desdites fentes étant adaptée à des fins de stockage des supports et chacun desdits éléments de transfert de données étant adapté à des fins de réception desdits supports et à des fins de transfert de données vers et en provenance desdits supports ; **caractérisé par**
sur un élément de transfert de données dans chaque partition hébergeant une désignation d'élément de logique respective (LUNO, LUN1, LUN2) d'un contrôleur virtuel (230, 21, 232) adressable par rapport à la partition à des fins de contrôle d'un transport de supports (220) ;
la mise en oeuvre de liaisons spécialisées respectives (222, 223, 224) entre lesdits éléments de transfert de données hébergeant un contrôleur virtuel et ledit contrôleur (213) sur lequel des commandes sont passées en provenance de l'élément de transfert de données jusqu'au contrôleur et des réponses en provenance du contrôleur sont reçues en provenance du contrôleur à des fins d'envoi par le réseau de stockage jusqu'aux dispositifs hôtes, et
le maintien d'une liste d'identificateurs hôtes uniques sur au moins un élément de transfert de données d'une partition hébergeant une désignation logique d'un contrôleur virtuel et accordant l'accès à la partition respective uniquement aux dispositifs hôtes en envoyant des commandes en utilisant un identificateur hôte dans ladite liste.
